# EUROPEAN PATENT APPLICATION

(11) **EP 4 496 045 A2**
(43) Date of publication of application: **22.01.2025**
(21) Application number: 24188580.5
(22) Date of filing: 15.07.2024
(51) Int. Cl.: H01M 4/86, H01M 4/90, H01M 8/12

(54) **SOLID OXIDE FUEL CELL AND SOLID OXIDE FUEL CELL STACK**

(30) Priority: 21.07.2023 JP 2023119239
(71) Applicant: Toshiba Energy Systems & Solutions Corporation, Saiwai-ku Kawasaki-shi Kanagawa (JP)
(72) Inventor: OSADA, Norikazu, Kawasaki-shi, Kanagawa (JP); KAMEDA, Tsuneji, Minato-ku, Tokyo (JP)
(74) Representative: Hoffmann Eitle

(57) **Abstract**

A solid oxide cell (100) includes a hydrogen electrode (110), a solid oxide electrolyte layer (120), and an oxygen electrode (130). The hydrogen electrode (110) includes: a first hydrogen electrode layer (111) having a first surface and a second surface, the first surface being in contact with the oxide electrolyte layer, the second surface being opposite to the first surface; and a second hydrogen electrode layer (112) in contact with the second surface. The first hydrogen electrode layer (111) has a first metal particle and a first metal oxide particle. The second hydrogen electrode layer (112) has a second metal oxide particle with a second metal particle supported with the second metal oxide particle.

## Description

### FIELD

Embodiments relate to a solid oxide cell and a solid oxide cell stack.

### BACKGROUND

A solid oxide cell (SOC) can obtain a sufficient reaction rate even without using an expensive precious metal catalyst because of its high working temperature (600-1000°C) and therefore is used as a solid oxide fuel cell (SOFC) or a solid oxide electrolysis cell (SOEC). The SOFC is higher in power generation efficiency and generates less CO₂ as compared with other types of fuel cells, and therefore is expected to be a clean power generating system in the next generation. In principle, the SOEC can produce hydrogen at a lower electrolysis voltage because of its high operating temperature and is therefore expected to be a highly efficient hydrogen production device. Further, because of the high working temperature, the SOC can electrolyze not only water vapor but also CO₂, and operate as a CO₂ electrolysis device or a CO₂/H₂O co-electrolysis device. Further, the SOC is also considered to be used as a power storage system using SOFC/SOEC.

The SOC used as the SOFC, SOEC, or the like has a structure in which a hydrogen electrode (SOFC: hydrogen consumption electrode, SOEC: hydrogen generation electrode) on one side of a solid oxide electrolyte layer and an oxygen electrode (SOFC: oxygen consumption electrode, SOEC: oxygen generation electrode) is arranged on the opposite side. For both electrodes, a configuration having a porous structure so that reaction gas can be sufficiently diffused and has electrical conduction is applied. For the electrolyte of the SOC, a stabilized zirconia-based or lanthanum-gallium-based oxide (LaGaOs system) having high conductivity is generally used. The characteristic of the cell is decided by the activity of the electrocatalyst and the resistance loss depending on the ohmic resistance between terminals, and the catalyst activity on the hydrogen electrode side is particularly important during the electrolytic reaction. Further, in order to secure the strength of the cell, a structure using the hydrogen electrode side as a support is often provided. Therefore, the hydrogen electrode is required to have the strength to support the cell, the catalyst activity, the electrical conduction, and the diffusion property of the reaction gas. Further, in the CO₂ electrolysis or the CO₂/H₂O co-electrolysis, a main reaction of CO₂ → CO + 1/2O₂ and undesirable side reactions of (CO₂ → C + O₂ and CO → C + 1/2O₂) of C deposition may occur on the hydrogen electrode.

As explained above, it is required to improve the reactivity of the hydrogen electrode being the main reaction of the SOC and increase the strength of the hydrogen electrode functioning as the support and thus increase the strength of the cell strength of the SOC. Further, it is required to dominantly promote the main reaction of CO₂ → CO + 1/2O₂ which occurs by the hydrogen electrode of the CO₂ electrolysis or CO₂/H₂O co-electrolysis stabler than H₂O made to react in the water vapor electrolysis, and to prevent or reduce the undesirable side reactions (CO₂ → C + O₂ and CO → C + 1/2O₂) in which C precipitates.

### BRIEF DESCRIPTION OF THE DRAWINGS

FIG. 1 is a cross-sectional view illustrating a solid oxide cell in an embodiment.
FIG. 2 is a cross-sectional view schematically illustrating a configuration of a second hydrogen electrode layer of the solid oxide cell illustrated in FIG. 1.

### DETAILED DESCRIPTION

A solid oxide cell in an embodiment includes: a hydrogen electrode; a solid oxide electrolyte layer; and an oxygen electrode. The hydrogen electrode includes: a first hydrogen electrode layer having a first surface and a second surface, the first surface being in contact with the oxide electrolyte layer, the second surface being opposite to the first surface; and a second hydrogen electrode layer in contact with the second surface. The first hydrogen electrode layer has a first metal particle and a first metal oxide particle. The second hydrogen electrode layer has a second metal oxide particle with a second metal particle supported with the second metal oxide particle.

Hereinafter, solid oxide cells in embodiments will be explained with reference to the drawings. In each of the embodiments illustrated below, substantially the same components are denoted by the same reference signs and an explanation thereof is partially omitted in some cases. The drawings are schematic and a relation between the thickness and planar dimension, a thickness ratio among the components, and so on may be different from actual ones. The sign "-" in the following explanation indicates a range between the upper limit value and the lower limit value of each numerical value. In that case, each numerical value range includes the upper limit value and the lower limit value.

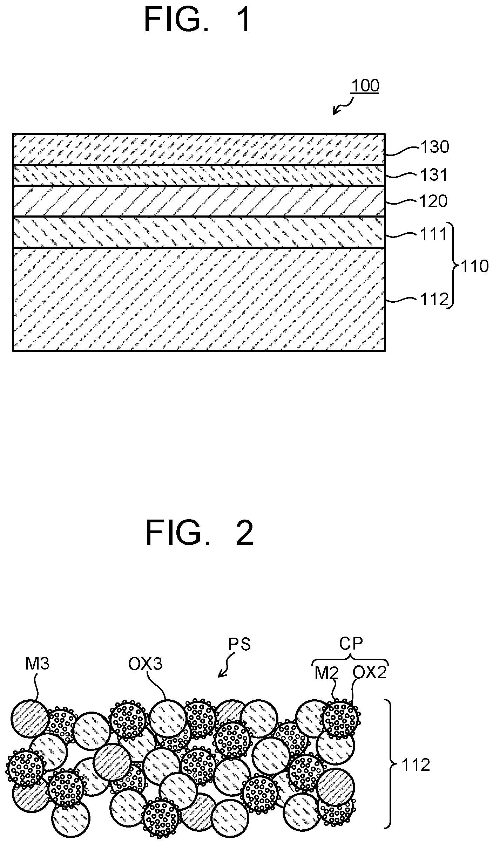

FIG. 1 illustrates a cross section of a solid oxide cell according to an embodiment. The solid oxide cell illustrated in FIG. 1 is a hydrogen electrode-supported flat plate type electrochemical cell 100, and includes a stacked structure of a porous hydrogen electrode 110, a solid oxide electrolyte 120, and an oxygen electrode 130. The hydrogen electrode 110 includes a first hydrogen electrode layer 111 as a hydrogen electrode active layer arranged to be in contact with the solid oxide electrolyte 120, and a second hydrogen electrode layer 112 as a hydrogen electrode supporting layer in contact with a second surface opposite to a first surface of the first hydrogen electrode layer 111, the first surface being in contact with the solid oxide electrolyte 120. The solid oxide cell may include a reaction preventing layer 131 between the solid oxide electrolyte 120 and the oxygen electrode 130.

The first hydrogen electrode layer 111 is composed of a porous layer made of a hydrogen electrode active material which causes a reaction by the hydrogen electrode 110, and concretely has gas permeability by the skeleton of a network structure. The first hydrogen electrode layer 111 has therein one or more of open pores that define at least one gas passages through which reactive gas (reducible gas) flows at least partially surrounded by the skeleton of the network structure, and can electrolyze water vapor flowing into the open pore into oxygen ions and hydrogen in the case of applying the electrochemical cell, for example, to a water vapor electrolysis cell.

The first hydrogen electrode layer 111 includes a sintered compound (a sintered porous member) of a first metal particle and a first metal oxide particle. The first metal oxide particle preferably includes at least one selected from the group consisting of zirconia (ZrO₂) stabilized with at least one selected oxide from yttrium (Y) oxide and scandium(Sc) oxide, namely, at least one of yttrium oxide (Y₂O₂) and scandium oxide (Sc₂O₃), ceria (CeO₂) doped with at least one selected from samarium (Sm) oxide, gadolinium (Gd) oxide, and yttrium (Y) oxide, namely, at least one of samarium oxide (Sm₂O₃), gadolinium oxide (Gd₂O₃), and Y₂O₃, and strontium titanate (SrTiO₃) doped with yttrium (Y), which function as a part of the hydrogen electrode active material which causes the reaction by the hydrogen electrode 110. A representative example of the stabilized zirconia can be zirconia (YSZ) stabilized with a Y-oxide. Example of the doped ceria include ceria (GDC) doped with gadolinium oxide.

The first metal particle contained in the aforementioned sintered member or solid-dissolved in the first metal oxide particle and functioning as the hydrogen electrode active material preferably contains at least one selected from the group consisting of nickel (Ni), copper (Cu), iron (Fe), and cobalt (Co). The first metal particle is not limited to a free particle of the aforementioned metal but may be an alloy particle containing the aforementioned metal. In the sintered compound constituting the first hydrogen electrode layer 111, a ratio between the first metal particle and the first metal oxide particle is preferably 45:55 to 65:35 in mass ratio.

The second hydrogen electrode layer 112 is a strength member which is mainly responsible for the strength of the electrochemical cell 100, is composed of a porous sintered member having gas permeability, and has a gas passage through which reactive gas (reducible gas) such as water vapor can flows. The second hydrogen electrode layer 112 includes a porous sintered member PS having a composite particle CP (M2/OX2) having a second metal oxide particle OX2 with a second metal particle M2 supported with the second metal oxide particle OX2 as illustrated in FIG. 2. The porous sintered member PS constituting the second hydrogen electrode layer 112 may further have a third metal particle M3 and a third metal oxide particle OX3.

In the porous sintered member constituting the second hydrogen electrode layer 112, the second metal particle M2 supported on the second metal oxide particle OX2 preferably contains at least one selected from the group consisting of Ni, Cu, Fe, and Co. The second metal particle M2 is not limited to the free particle of the aforementioned metal but may be an alloy particle containing the aforementioned metal. The second metal oxide particle OX2 preferably contains at least one selected from the group consisting of aluminium oxide such as alumina (Al₂O₃), magnesium oxide such as magnesia (MgO), and silicon oxide such as silica (SiO₂). The second metal oxide particle OX2 may be a composite oxide particle containing two or more of the aforementioned metal oxides.

The third metal particle M3 preferably contains at least one selected from the group consisting of Ni, Cu, Fe, and Co. The third metal particle M3 is not limited to the free particle of the aforementioned metal but may be an alloy particle containing the aforementioned metal. The third metal oxide particle OX3 preferably contains at least one selected from the group consisting of zirconia (ZrO₂) stabilized with oxide of at least one selected from Y and Sc, ceria (CeO₂) doped with oxide of at least one selected from Sm, Gd, and Y, and strontium titanate (SrTiOs) doped with Y

The porous sintered member constituting the second hydrogen electrode layer 112 has the composite particle CP having the second metal oxide particle OX2 supporting the second metal particle M2. The second metal oxide particle OX2 contains at least one of alumina, magnesia, silica, and their composite oxides. These metal oxides are high in strength, and therefore the composite particle CP including the second metal oxide particle OX2 can reinforce or enhance the strength of the second hydrogen electrode layer 112 as the hydrogen electrode supporting layer. Accordingly, it possible to increase the strength of the second hydrogen electrode layer 112 and the electrochemical cell 100 having it. Further, the second metal oxide particle OX2 supports the second metal particle M2 and thus has electrical conduction. This can obtain the electrical conduction as the second hydrogen electrode layer 112 of the electrochemical cell 100. The third metal particle M3 and the third metal oxide particle OX3 also contribute to the electrical conduction of the second hydrogen electrode layer 112.

Further, the porous sintered member constituting the second hydrogen electrode layer 112 further has the third metal particle M3 and the third metal oxide particle OX3. The third metal particle M3 and the third metal oxide particle OX3 function as the hydrogen electrode active material which causes the reaction by the hydrogen electrode 110. The second hydrogen electrode layer 112 and the first hydrogen electrode layer 111 constitute the hydrogen electrode 110, and thereby can enhance the reactivity of the hydrogen electrode 110 being the main reaction of the electrochemical cell 100 and can dominantly promote the main reaction and decrease the occurrence percentage of undesirable side reactions. For example, in the CO₂ electrolysis or the CO₂/H₂O co-electrolysis, it is possible to dominantly promote the main reaction of CO₂ → CO + 1/2O₂ occurring by the hydrogen electrode and prevent or reduce the side reactions of CO₂ → C + O₂ and CO → C + 1/2O₂ in which C precipitates.

The volume ratio of the composite particles CP having the second metal oxide particles OX2 supporting the second metal particles M2 in the second hydrogen electrode layer 112 is preferably in a range of 3 vol% or more and 30 vol% or less. If the volume ratio of the composite particles CP is less than 3 vol%, the strength of the second hydrogen electrode layer 112 may not be sufficiently increased. If the volume ratio of the composite particles CP is more than 30 vol%, the reaction activity and the like of the second hydrogen electrode layer 112 may deteriorate. The volume ratio of the third metal particles M3 in the second hydrogen electrode layer 112 is preferably in a range of 30 vol% or more and 65 vol% or less. The volume ratio of the third metal oxide particles OX3 is preferably in a range of 30 vol% or more and 50 vol% or less.

The second metal particles M2 preferably have an average particle size of 20 nm or more and 200 nm or less. If the average particle size of the second metal particles M2 is less than 20 nm, the electrical conduction may deteriorate. If the average particle size of the second metal particles M2 is more than 200 nm, the control of the reactivity by the hydrogen electrode 110 may deteriorate so that the percentage of side reaction may increase. The average particle size of the second metal particles M2 supported on the second metal oxide particles OX2 can be measured, for example, by observing the second metal oxide particles OX2 supporting the second metal particles M2 under the scanning electron microscope (SEM) and making it into a graphic representation (SEM image), and image-processing the SEM image.

The solid oxide electrolyte 120 has one surface stacked on the hydrogen electrode 110 and another surface stacked on the oxygen electrode 130 via the reaction preventing layer 131. The solid oxide electrolyte 120 is made of a dense solid oxide electrolyte and is an ion conductor which allows ions such as an oxygen ion to pass therethrough but does not conduct electricity. The solid oxide electrolyte 120, for example, is formed using stabilized zirconia in which at least one stabilizing agent selected from the group consisting of Y₂O₃, Sc₂O₃, Yb₂O₃, Gd₂O₃, CaO, MgO, and CeO₂ is solid-dissolved, a perovskite oxide expressed by Ln₁₋ₓAₓBO_{3-δ} (Ln representing a rare earth element such as La, A representing at least one element selected from Sr, Ca, Ba, and so on, B representing at least one element selected from Ga, Cr, Mn, Co, Fe, Ni, and so on, x representing 0 ≤ x ≤ 1, δ representing 0 ≤ δ ≤ 1), or the like.

The oxygen electrode 130 is made of an oxygen electrode active material and composed of a porous body having gas diffusibility and electronic conductivity, and can generate an oxygen molecule (O₂), for example, from an oxygen ion (O²⁻) reached the inside of the porous body from the solid oxide electrolyte 120 and an electron (e⁻) supplied from an external power supply. As the oxygen electrode 130, for example, a porous sintered member of a perovskite oxide expressed by Ln₁₋ₓAₓBO_{3-δ} (Ln representing a rare earth element such as La, A representing at least one element selected from Sr, Ca, Ba, and so on, B representing at least one element selected from Ga, Cr, Mn, Co, Fe, Ni, and so on, x representing 0 ≤ x ≤ 1, δ representing 0 ≤ δ ≤ 1) is used. Representative examples of the constituent material of the oxygen electrode 130 include (La₁₋ₓSrₓ)(Co_{1-y}Fe_{y})O_{3-δ} (LSCF).

The reaction preventing layer 131 is a dense reaction preventing layer which is arranged when necessary between the solid oxide electrolyte 120 and the oxygen electrode 130 and prevents the diffusion and the reaction of elements between the solid oxide electrolyte 120 and the oxygen electrode 130.

The electrochemical cell 100 in the embodiment is constituted by stacking in order the second hydrogen electrode layer 112, the first hydrogen electrode layer 111, the solid oxide electrolyte 120, the reaction preventing layer 131, and the oxygen electrode 130. The electrochemical cell 100 is made, for example, by forming a precursor layer of the second hydrogen electrode layer 112, a precursor layer of the first hydrogen electrode layer 111, and the solid oxide electrolyte 120 in order and heating them. The reaction preventing layer 131 and the oxygen electrode 130 are formed in order on the heated stack and heated. The sintered member is heated in a reducing atmosphere. For the precursor layer of the second hydrogen electrode layer 112 and the precursor layer of the first hydrogen electrode layer 111, for example, metal oxide particles are used as forming materials of the first metal particle, the second metal particle, and the third metal particle, and they are heated in the reducing atmosphere to form metal particles, thereby producing the electrochemical cell 100.

The electrochemical cell 100 in the embodiment may be used as it is, or may be used as an electrochemical cell stack including a plurality of electrochemical cells 100 in a stacked state. The electrochemical cell 100 in the embodiment is used for a CO₂ electrolysis device, a CO₂/H₂O co-electrolysis device, a water vapor electrolysis device, a fuel cell device, and the like. The electrochemical cell 100 in the embodiment is preferable for the CO₂ electrolysis device and the CO₂/H₂O co-electrolysis device among them.

### EXAMPLES

Next, concrete examples of the electrochemical cell in the embodiment and their evaluation results will be explained.

### (Example 1)

NiO powder and Al₂O₃ powder were mixed and heated to produce a nickel aluminum composite oxide expressed by NiAl₂O₄. This was pulverized into composite oxide particles. Powder, which was made by mixing powder obtained by mixing NiO and ceria (GDC10) doped with Gd₂O₃ at a mass ratio of 6:4 into a composition of (Gd₂O₃)_{0.1}(CeO₂)_{0.9} and the composite oxide particles, was made into a paste, and this paste was made into a sheet to produce the second hydrogen electrode layer (hydrogen electrode base) precursor. Thereafter, the paste containing a mixture of NiO and GDC10 as the first hydrogen electrode layer (hydrogen electrode active layer) precursor and a paste containing zirconia (YSZ8) doped with Y₂O₃ to have a composition of (Y₂O₃)_{0.08}(ZrO₂)_{0.92} as the electrolyte were formed in order on the second hydrogen electrode layer precursor. Thereafter, the second hydrogen electrode layer precursor-first hydrogen electrode layer precursor-electrolyte was heated under the condition of 1200°C or higher and 1500°C or lower until sufficient strength was achieved in each layer and between layers.

The paste of GDC10 was formed into a sheet as the reaction preventing layer on the heated stack, and heated under the condition of 1200°C or higher and 1500°C or lower until sufficient strength was achieved in each layer and between layers. Subsequently, the paste of La(Sr)Co(Fe)O_{3-δ} (LSCF) was formed into a sheet as the oxygen electrode on the reaction preventing layer, and heated under the condition of 900°C or higher and 1200°C or lower to produce a precursor of the solid oxide cell in Example 1.

The above precursor of the solid oxide cell in Example 1 was set in an output characteristic evaluation device, and dry hydrogen was made to flow to the hydrogen electrode side at 700°C or higher and N₂/O₂ mixed gas mixed at a volume ratio of 4:1 was made to flow to the oxygen electrode side to reduce the first hydrogen electrode layer precursor and the second hydrogen electrode layer precursor, thereby forming the first hydrogen electrode layer and the second hydrogen electrode layer.

The hydrogen electrode output characteristic evaluation device can supply mixed gas of water vapor, CO₂, and H₂O mixed at an arbitrary ratio to the hydrogen electrode side, operate the solid oxide cell in an SOFC mode, an SOEC mode, and a co-electrolysis mode, and evaluate I-V characteristics at that time. After the reduction reaction was performed, the hydrogen electrode output characteristic evaluation device operated the solid oxide cell at a measurement temperature as the SOFC, the SOEC, and the co-electrolysis device, and evaluated I-V characteristics at the initial stage.

### (Example 2)

NiO powder and MgO powder were mixed and heated to produce a nickel magnesium composite oxide expressed by NiMgO. This was pulverized into composite oxide particles. Powder, which was made by mixing powder obtained by mixing NiO and ceria (GDC10) doped with Gd₂O₃ at a mass ratio of 6:4 and the composite oxide particles, was made into a paste, and this paste was made into a sheet to produce the second hydrogen electrode layer (hydrogen electrode base) precursor. Thereafter, the paste containing a mixture of NiO and GDC10 as the first hydrogen electrode layer (hydrogen electrode active layer) precursor and a paste containing Y-stabilized zirconia (YSZ8) as the electrolyte were formed in order on the second hydrogen electrode layer precursor. Thereafter, the second hydrogen electrode layer precursor-first hydrogen electrode layer precursor-electrolyte was heated under the condition of 1200°C or higher and 1500°C or lower until sufficient strength was achieved in each layer and between layers.

The paste of GDC10 was formed into a sheet as the reaction preventing layer on the heated stack, and heated under the condition of 1000°C or higher and 1500°C or lower until sufficient strength was achieved in each layer and between layers. Subsequently, the paste of La(Sr)Co(Fe)O_{3-δ} (LSCF) was formed into a sheet as the oxygen electrode on the reaction preventing layer, and heated under the condition of 900°C or higher and 1200°C or lower to produce a precursor of the solid oxide cell in Example 2.

The above precursor of the solid oxide cell in Example 2 was set in the output characteristic evaluation device, and dry hydrogen was made to flow to the hydrogen electrode side at 700°C or higher and N₂/O₂ mixed gas mixed at a volume ratio of 4:1 was made to flow to the oxygen electrode side to reduce the first hydrogen electrode layer precursor and the second hydrogen electrode layer precursor, thereby forming the first hydrogen electrode layer and the second hydrogen electrode layer. The hydrogen electrode output characteristic evaluation device evaluated I-V characteristics in the initial state as in Example 1.

### (Example 3)

NiO powder, MgO powder, and SiO₂ powder were mixed and heated to produce a nickel magnesium silica composite oxide expressed by NiMgO-SiO₂. This was pulverized into composite oxide particles. Powder, which was made by mixing powder obtained by mixing NiO and ceria (GDC10) doped with Gd₂O₃ at a mass ratio of 6:4 and the composite oxide particles, was made into a paste, and this paste was made into a sheet to produce the second hydrogen electrode layer (hydrogen electrode base) precursor. Thereafter, the paste containing a mixture of NiO and GDC10 as the first hydrogen electrode layer (hydrogen electrode active layer) precursor and a paste containing Y-stabilized zirconia (YSZ8) as the electrolyte were formed in order on the second hydrogen electrode layer precursor. Thereafter, the second hydrogen electrode layer precursor-first hydrogen electrode layer precursor-electrolyte was heated under the condition of 1200°C or higher and 1500°C or lower until sufficient strength was achieved in each layer and between layers.

The paste of GDC10 was formed into a sheet as the reaction preventing layer on the heated stack, and heated under the condition of 1000°C or higher and 1500°C or lower until sufficient strength was achieved in each layer and between layers. Subsequently, the paste of La(Sr)Co(Fe)O_{3-δ} (LSCF) was formed into a sheet as the oxygen electrode on the reaction preventing layer, and heated under the condition of 900°C or higher and 1200°C or lower to produce a precursor of the solid oxide cell in Example 3.

The above precursor of the solid oxide cell in Example 3 was set in the output characteristic evaluation device, and dry hydrogen was made to flow to the hydrogen electrode side at 700°C or higher and N₂/O₂ mixed gas mixed at a volume ratio of 4:1 was made to flow to the oxygen electrode side to reduce the first hydrogen electrode layer precursor and the second hydrogen electrode layer precursor, thereby forming the first hydrogen electrode layer and the second hydrogen electrode layer. The hydrogen electrode output characteristic evaluation device evaluated I-V characteristics in the initial state as in Example 1.

### (Example 4)

CuO powder and Al₂O₃ powder were mixed and heated to produce a copper aluminum composite oxide expressed by CuAl₂O₄. This was pulverized into composite oxide particles. Powder, which was made by mixing powder obtained by mixing NiO and ceria (GDC10) doped with Gd₂O₃ at a mass ratio of 6:4 and the composite oxide particles, was made into a paste, and this paste was made into a sheet to produce the second hydrogen electrode layer (hydrogen electrode base) precursor. Thereafter, the paste containing a mixture of NiO and GDC10 as the first hydrogen electrode layer (hydrogen electrode active layer) precursor and a paste containing Y-stabilized zirconia (YSZ8) as the electrolyte were formed in order on the second hydrogen electrode layer precursor. Thereafter, the second hydrogen electrode layer precursor-first hydrogen electrode layer precursor-electrolyte was heated under the condition of 1200°C or higher and 1500°C or lower until sufficient strength was achieved in each layer and between layers.

The paste of GDC10 was formed into a sheet as the reaction preventing layer on the heated stack, and heated under the condition of 1000°C or higher and 1500°C or lower until sufficient strength was achieved in each layer and between layers. Subsequently, the paste of La(Sr)Co(Fe)O_{3-δ} (LSCF) was formed into a sheet as the oxygen electrode on the reaction preventing layer, and heated under the condition of 900°C or higher and 1200°C or lower to produce a precursor of the solid oxide cell in Example 4.

The above precursor of the solid oxide cell in Example 4 was set in the output characteristic evaluation device, and dry hydrogen was made to flow to the hydrogen electrode side at 700°C or higher and N₂/O₂ mixed gas mixed at a volume ratio of 4:1 was made to flow to the oxygen electrode side to reduce the first hydrogen electrode layer precursor and the second hydrogen electrode layer precursor, thereby forming the first hydrogen electrode layer and the second hydrogen electrode layer. The hydrogen electrode output characteristic evaluation device evaluated I-V characteristics in the initial state as in Example 1.

### (Example 5)

CuO powder, MgO powder, and SiO₂ powder were mixed and heated to produce a copper magnesium composite oxide expressed by CuMgO. This was pulverized into composite oxide particles. Powder, which was made by mixing powder obtained by mixing NiO and ceria (GDC10) doped with Gd₂O₃ at a mass ratio of 6:4 and the composite oxide particles, was made into a paste, and this paste was made into a sheet to produce the second hydrogen electrode layer (hydrogen electrode base) precursor. Thereafter, the paste containing a mixture of NiO and GDC10 as the first hydrogen electrode layer (hydrogen electrode active layer) precursor and a paste containing Y-stabilized zirconia (YSZ8) as the electrolyte were formed in order on the second hydrogen electrode layer precursor. Thereafter, the second hydrogen electrode layer precursor-first hydrogen electrode layer precursor-electrolyte was heated under the condition of 1200°C or higher and 1500°C or lower until sufficient strength was achieved in each layer and between layers.

The paste of GDC10 was formed into a sheet as the reaction preventing layer on the heated stack, and heated under the condition of 1000°C or higher and 1500°C or lower until sufficient strength was achieved in each layer and between layers. Subsequently, the paste of La(Sr)Co(Fe)O_{3-δ} (LSCF) was formed into a sheet as the oxygen electrode on the reaction preventing layer, and heated under the condition of 900°C or higher and 1200°C or lower to produce a precursor of the solid oxide cell in Example 5.

The above precursor of the solid oxide cell in Example 5 was set in the output characteristic evaluation device, and dry hydrogen was made to flow to the hydrogen electrode side at 700°C or higher and N₂/O₂ mixed gas mixed at a volume ratio of 4:1 was made to flow to the oxygen electrode side to reduce the first hydrogen electrode layer precursor and the second hydrogen electrode layer precursor, thereby forming the first hydrogen electrode layer and the second hydrogen electrode layer. The hydrogen electrode output characteristic evaluation device evaluated I-V characteristics in the initial state as in Example 1.

### (Example 6)

CuO powder and Al₂O₃ powder were mixed and heated to produce a copper aluminum composite oxide expressed by CuAl₂O₄. This was pulverized into composite oxide particles. Powder, which was made by mixing powder obtained by mixing NiO and zirconia (YSZ8) doped with Y₂O₃ at a mass ratio of 6:4 to have a composition of (Y₂O₃)_{0.08}(ZrO₂)_{0.92} and the composite oxide particles, was made into a paste, and this paste was made into a sheet to produce the second hydrogen electrode layer (hydrogen electrode base) precursor. Thereafter, the paste containing NiO and YSZ8 as the first hydrogen electrode layer (hydrogen electrode active layer) precursor and a paste containing Y-stabilized zirconia (YSZ8) as the electrolyte were formed in order on the second hydrogen electrode layer precursor. Thereafter, the second hydrogen electrode layer precursor-first hydrogen electrode layer precursor-electrolyte was heated under the condition of 1200°C or higher and 1500°C or lower until sufficient strength was achieved in each layer and between layers.

The paste of GDC10 was formed into a sheet as the reaction preventing layer on the heated stack, and heated under the condition of 1000°C or higher and 1500°C or lower until sufficient strength was achieved in each layer and between layers. Subsequently, the paste of La(Sr)Co(Fe)O_{3-δ} (LSCF) was formed into a sheet as the oxygen electrode on the reaction preventing layer, and heated under the condition of 900°C or higher and 1200°C or lower to produce a precursor of the solid oxide cell in Example 6.

The above precursor of the solid oxide cell in Example 6 was set in the output characteristic evaluation device, and dry hydrogen was made to flow to the hydrogen electrode side at 700°C or higher and N₂/O₂ mixed gas mixed at a volume ratio of 4:1 was made to flow to the oxygen electrode side to reduce the first hydrogen electrode layer precursor and the second hydrogen electrode layer precursor, thereby forming the first hydrogen electrode layer and the second hydrogen electrode layer. The hydrogen electrode output characteristic evaluation device evaluated I-V characteristics in the initial state as in Example 1.

### (Example 7)

CuO powder and Al₂O₃ powder were mixed and heated to produce a copper aluminum composite oxide expressed by CuAl₂O₄. This was pulverized into composite oxide particles. Powder, which was made by mixing powder obtained by mixing NiO and strontium titanate (YST) doped with Y at a mass ratio of 6:4 to have a composition of Sr(Y)TiO₃ and the composite oxide particles, was made into a paste, and this paste was made into a sheet to produce the second hydrogen electrode layer (hydrogen electrode base) precursor. Thereafter, the paste containing a mixture of NiO and YSZ8 as the first hydrogen electrode layer (hydrogen electrode active layer) precursor and a paste containing Y-stabilized zirconia (YSZ8) as the electrolyte were formed in order on the second hydrogen electrode layer precursor. Thereafter, the second hydrogen electrode layer precursor-first hydrogen electrode layer precursor-electrolyte was heated under the condition of 1200°C or higher and 1500°C or lower until sufficient strength was achieved in each layer and between layers.

The paste of GDC10 was formed into a sheet as the reaction preventing layer on the heated stack, and heated under the condition of 1000°C or higher and 1500°C or lower until sufficient strength was achieved in each layer and between layers. Subsequently, the paste of La(Sr)Co(Fe)O_{3-δ} (LSCF) was formed into a sheet as the oxygen electrode on the reaction preventing layer, and heated under the condition of 900°C or higher and 1200°C or lower to produce a precursor of the solid oxide cell in Example 7.

The above precursor of the solid oxide cell in Example 7 was set in the output characteristic evaluation device, and dry hydrogen was made to flow to the hydrogen electrode side at 700°C or higher and N₂/O₂ mixed gas mixed at a volume ratio of 4:1 was made to flow to the oxygen electrode side to reduce the first hydrogen electrode layer precursor and the second hydrogen electrode layer precursor, thereby forming the first hydrogen electrode layer and the second hydrogen electrode layer. The hydrogen electrode output characteristic evaluation device evaluated I-V characteristics in the initial state as in Example 1.

### (Comparative example 1)

A paste of powder obtained by mixing NiO and ceria (GDC10) doped with Gd₂O₃ at a mass ratio of 6:4 was made into a sheet to produce the second hydrogen electrode layer (hydrogen electrode base) precursor. The paste containing a mixture of NiO and GDC10 as the first hydrogen electrode layer (hydrogen electrode active layer) precursor and a paste containing Y-stabilized zirconia (YSZ8) as the electrolyte were formed in order on the second hydrogen electrode layer precursor. The second hydrogen electrode layer precursor-first hydrogen electrode layer precursor-electrolyte was heated under the condition of 1200°C or higher and 1500°C or lower until sufficient strength was achieved in each layer and between layers.

The paste of GDC10 was formed into a sheet as the reaction preventing layer on the heated stack, and heated under the condition of 1000°C or higher and 1500°C or lower until sufficient strength was achieved in each layer and between layers. Subsequently, the paste of La(Sr)Co(Fe)O_{3-δ} (LSCF) was formed into a sheet as the oxygen electrode on the reaction preventing layer, and heated under the condition of 900°C or higher and 1200°C or lower to produce a precursor of the solid oxide cell in Comparative example 1.

The above precursor of the solid oxide cell in Comparative example 1 was set in the output characteristic evaluation device, and dry hydrogen was made to flow to the hydrogen electrode side at 700°C or higher and N₂/O₂ mixed gas mixed at a volume ratio of 4:1 was made to flow to the oxygen electrode side to reduce the first hydrogen electrode layer precursor and the second hydrogen electrode layer precursor, thereby forming the first hydrogen electrode layer and the second hydrogen electrode layer. The hydrogen electrode output characteristic evaluation device evaluated I-V characteristics in the initial state as in Example 1.

### (Reference example 1)

Composite oxide particles supporting Ni metal particles on the surface of Al₂O₃ powder was prepared using a nickel nitrate solution. Powder, which was made by mixing powder obtained by mixing nickel oxide (NiO) and ceria (GDC10) doped with Gd₂O₃ at a mass ratio of 6:4 and the composite oxide particles, was made into a paste, and this paste was made into a sheet to produce the second hydrogen electrode layer (hydrogen electrode base) precursor. The paste containing a mixture of NiO and GDC10 as the first hydrogen electrode layer (hydrogen electrode active layer) precursor and a paste containing Y-stabilized zirconia (YSZ8) as the electrolyte were formed in order on the second hydrogen electrode layer precursor. Thereafter, the second hydrogen electrode layer precursor-first hydrogen electrode layer precursor-electrolyte was heated under the condition of 1200°C or higher and 1500°C or lower until sufficient strength was achieved in each layer and between layers.

The paste of GDC10 was formed into a sheet as the reaction preventing layer on the heated stack, and heated under the condition of 1000°C or higher and 1500°C or lower until sufficient strength was achieved in each layer and between layers. Subsequently, the paste of La(Sr)Co(Fe)O_{3-δ} (LSCF) was formed into a sheet as the oxygen electrode on the reaction preventing layer, and heated under the condition of 900°C or higher and 1200°C or lower to produce a precursor of the solid oxide cell in Reference example 1.

The above precursor of the solid oxide cell in Reference example 1 was set in the output characteristic evaluation device, and dry hydrogen was made to flow to the hydrogen electrode side at 700°C or higher and N₂/O₂ mixed gas mixed at a volume ratio of 4:1 was made to flow to the oxygen electrode side to reduce the first hydrogen electrode layer precursor and the second hydrogen electrode layer precursor, thereby forming the first hydrogen electrode layer and the second hydrogen electrode layer. The hydrogen electrode output characteristic evaluation device evaluated I-V characteristics in the initial state as in Example 1.

### (Co-electrolysis characteristics evaluation/main reaction percentage measurement)

The main reaction percentages were calculated from the reaction amounts of outlet gas in a co-electrolysis mode in Examples 1 to 7, Comparative example 1, and Reference example 1. The results are listed in Table 1. Table 1 lists the second metal particle, the second metal oxide particle, the third metal oxide particle, and the average particle size of the second metal particles as well. The main reaction percentages of the cells in Examples 1 to 3 are almost the same and higher than the percentage in Comparative example 1, showing the effect of the Ni metal particles. Further, in comparison between Example 1 and Reference example 1, the average particle size of the second metal particles in Reference example 1 produced by the impregnation method is 300 nm which is larger than that in Example 1, showing that effect of preventing of reducing the side reaction is low. In addition, in comparison among Example 4, Example 1, and Reference example 1, the main reaction percentage can be made higher in Example 4, showing that the effect of preventing or reducing the side reaction is higher by Cu than by Ni. Further, the main reaction percentages in Examples 4 to 7 are almost the same, showing that any of the metal particles selected here can exert the effect of Cu.

**[Table 1]**

| | Second hydrogen electrode layer | | | Main reaction percentage | Second metal particle |
|---|---|---|---|---|---|
| | Second metal particle | Second metal oxide particle | Third metal oxide particle | (%) | Average particle size (µm) |
| Example 1 | Ni | Al₂O₃ | GDC10 | 85 | 50 |
| Example 2 | Ni | MgO | GDC10 | 83 | 50 |
| Example 3 | Ni | MgO-SiO₂ | GDC10 | 83 | 50 |
| Example 4 | Cu | Al₂O₃ | GDC10 | 95 | 50 |
| Example 5 | Cu | MgO | GDC10 | 91 | 50 |
| Example 6 | Cu | Al₂O₃ | YSZ8 | 91 | 50 |
| Example 7 | Cu | Al₂O₃ | YSZ | 94 | 50 |
| Comparative example 1 | - | - | GDC | 62 | 50 |
| Reference example 1 | Ni | Al₂O₃ | GDC10 | 68 | 300 |

Note that the configurations in the above-explained embodiments can be applied in combination, and can be partially replaced. While certain embodiments of the present invention have been described above, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A solid oxide cell comprising:
a hydrogen electrode;
a solid oxide electrolyte layer; and
an oxygen electrode, wherein
the hydrogen electrode includes:
a first hydrogen electrode layer having a first surface and a second surface, the first surface being in contact with the oxide electrolyte layer, the second surface being opposite to the first surface; and
a second hydrogen electrode layer in contact with the second surface,
the first hydrogen electrode layer has a first metal particle and a first metal oxide particle, and
the second hydrogen electrode layer has a second metal oxide particle with a second metal particle supported with the second metal oxide particle.

2. The solid oxide cell according to claim 1, wherein
the second hydrogen electrode layer further has a third metal particle and a third metal oxide particle.

3. The solid oxide cell according to claim 1, wherein:
the first metal particle contains at least one selected from the group consisting of Ni, Cu, Co, and Fe,
the first metal oxide particle contains at least one selected from the group consisting of
a zirconia stabilized with at least one oxide selected from the group consisting of a yttrium oxide and a scandium oxide,
a ceria doped with at least one oxide selected from the group consisting of a samarium oxide, a gadolinium oxide, and a yttrium oxide, and
a strontium titanate doped with yttrium; and
the second metal particle contains at least one selected from the group consisting of Ni, Cu, Co, and Fe, and
the second metal oxide particle contains at least one selected from the group consisting of alumina, magnesia, and silica.

4. The solid oxide cell according to claim 2, wherein
the third metal particle contains at least one selected from the group consisting of Ni, Cu, Co, and Fe, and
the third metal oxide particle contains at least one selected from the group consisting of
a zirconia stabilized with at least one oxide selected from the group consisting of a yttrium oxide and a scandium oxide,
a ceria doped with at least one oxide selected from the group consisting of a samarium oxide, a gadolinium oxide, and a yttrium oxide, and
a strontium titanate doped with yttrium.

5. The solid oxide cell according to claim 1, wherein
the second hydrogen electrode layer has a plurality of the second metal oxide particles with a plurality of the second metal particles in a range of 3 vol% or more and 30 vol% or less.

6. The solid oxide cell according to claim 1, wherein
the second hydrogen electrode layer has a plurality of the second metal oxide particles with a plurality of the second metal particles, and
the plurality of the second metal particles has an average particle size of 20 nm or more and 200 nm or less.

7. The solid oxide cell according to claim 1, wherein
the second metal particle is a reduced substance of a metal oxide particle.

8. The solid oxide cell according to claim 1, wherein
the solid oxide cell is an electrolysis cell configured to electrolyze carbon dioxide or an electrolysis cell configured to co-electrolyze carbon dioxide and water.

9. The solid oxide cell according to claim 1, wherein
the first hydrogen electrode layer includes a first sintered porous member, and
the first sintered porous member has the first metal particle and the first metal oxide particle.

10. The solid oxide cell according to claim 9, wherein
the first sintered porous member has a first pore that defines a first gas passage through which a reducible gas flows.

11. The solid oxide cell according to claim 1, wherein
the second hydrogen electrode layer includes a second sintered porous member,
the second sintered porous member has the second metal oxide particle with the second metal particle.

12. The solid oxide cell according to claim 2, wherein
the second hydrogen electrode layer includes a second sintered porous member,
the second sintered porous member has the second metal oxide particle with the second metal particle, the third metal particle, and the third metal oxide particle.

13. The solid oxide cell according to claim 11, wherein
the second sintered porous member has a second pore that defines a second gas passage through which a reducible gas flows.

14. The solid oxide cell according to claim 1, wherein
the second metal oxide particle with the second metal particle is configured to activate a reaction of reducing carbon dioxide to produce carbon monoxide and to reinforce the second sintered porous member.

15. A solid oxide cell stack comprising a plurality of the solid oxide cells according to any one of claim 1 to claim 14, the plurality of the solid oxide cells being stacked.
